# EUROPEAN PATENT APPLICATION

(11) **EP 2 080 996 A1**
(43) Date of publication of application: **22.07.2009**
(21) Application number: 07831457.2
(22) Date of filing: 08.11.2007
(51) Int. Cl.: G01F 1/66, G01F 1/00, G01F 3/22, G01F 7/00

(54) **ULTRASONIC FLUID MEASUREMENT DEVICE**

(30) Priority: 08.11.2006 JP 2006303201
(71) Applicant: Panasonic Corporation, Kadoma-shi Osaka 571-8501 (JP)
(72) Inventor: NAKABAYASHI, Yuji, Osaka 540-6207 (JP); ADACHI, Akihisa, Osaka 540-6207 (JP); SATOU, Masato, Osaka 540-6207 (JP)
(74) Representative: Schwabe - Sandmair - Marx
(86) International application number: PCT/JP2007/071726
(87) International publication number: WO 2008/056745

(57) **Abstract**

An ultrasonic fluid measuring device capable of improving a measuring accuracy is provided.

In an ultrasonic fluid measuring device 10, first to third ultrasonic measuring portions 16 to 18 are equipped with first ultrasonic transmitter-receivers 16A to 18A and second ultrasonic transmitter-receivers 16B to 18B provided to a measuring pass 14 respectively, and also first to third ultrasonic propagation paths 36 to 38 connecting the first ultrasonic transmitter-receiver 16A to 18A and the second ultrasonic transmitter-receivers 16B to 18B are provided to intersect with a passing direction of a fluid 24 flowing through the measuring pass 14 at different angles respectively. The ultrasonic fluid measuring device 10 employs any one of measured values of the first to third ultrasonic measuring portions 16 to 18 in response to a flow rate Q.

## Description

### Technical Field

The present invention relates to an ultrasonic fluid measuring device constructed such that a first ultrasonic transmitter-receiver and a second ultrasonic transmitter-receiver of an ultrasonic measuring portion are provided to a measuring pass so as to measure a flow speed of a fluid flowing through the measuring pass by the ultrasonic measuring portion.

### Background Art

The ultrasonic fluid measuring device is the device that measures a propagation time of an ultrasonic wave in such a situation that the ultrasonic wave is caused to propagate through a measuring pass while flowing a fluid through the measuring pass, and then detects a flow speed of the fluid based on measured information.
An ultrasonic transmitting portion and an ultrasonic receiving portion are provided to the side surfaces of the short sides, which oppose to each other like a square cylinder shape a cross section of which is a rectangle, of the measuring pass respectively.

The ultrasonic transmitting portion and the ultrasonic receiving portion are arranged along a line, which intersect with the flowing direction of the measuring pass at a predetermined angle, to transmit/receive the ultrasonic wave.
Also, recently the ultrasonic fluid measuring device whose measuring pass is constructed as a multi-layered pass by arranging a plurality of partition plates in parallel in the measuring pass to improve a measuring accuracy has been proposed.

Also, recently the ultrasonic fluid measuring device in which a plurality of ultrasonic measuring portions (the first ultrasonic transmitter-receivers and the second ultrasonic transmitter-receivers) are arranged in the measuring pass to acquire a plurality of measured values and then an average value derived based upon these measured values is used as the final measured value has been proposed (Patent Literature 1).
In Patent Literature 1, angles of measuring passes of respective ultrasonic measuring portions are different.
Patent Literature 1: JP-A-2002-257607

### Disclosure of the Invention

### Problems that the Invention is to Solve

Meanwhile, in the above technology in Patent Literature 1, although any one of three measured values fed from three ultrasonic measuring portions is measured with high accuracy, the average value of three measured values containing two measured values of low accuracy is still used as the final measured value. Therefore, in fact a measuring accuracy is decreased.

The present invention has been made to solve the above problem, and it is an object of the present invention to provide an ultrasonic fluid measuring device capable of improving a measuring accuracy.

### Means for Solving the Problems

An ultrasonic fluid measuring device of the present invention, includes a measuring pass formed in a square cylinder a cross section of which is a rectangle; and a first ultrasonic measuring portion and a second ultrasonic measuring portion provided to the measuring pass; whereby the first ultrasonic measuring portion and the second ultrasonic measuring portion have a first ultrasonic transmitter-receiver and a second ultrasonic transmitter-receiver provided to the measuring pass respectively, and a first ultrasonic propagation path and a second ultrasonic propagation path, which connect the first ultrasonic transmitter-receiver and the second ultrasonic transmitter-receiver respectively, intersect with each other a passing direction of the fluid flowing through the measuring pass at different angles, wherein either of measured values of the first ultrasonic measuring portion and the second ultrasonic measuring portion is employed corresponding to the flow rate of the fluid.

The first ultrasonic propagation path of the first ultrasonic measuring portion and the second ultrasonic propagation path of the second ultrasonic measuring portion are provided to intersect with the passing direction of the fluid flowing through the measuring pass at different angles respectively, and then any one of measured values from the first ultrasonic measuring portion and the second ultrasonic measuring portion is employed corresponding to the flow rate.
As a result, an optimum measured value can be employed selectively in response to the flow rate of the fluid, and the measured value can be obtained with high accuracy.

Also, in the present invention, any one measured value, which is suitable for the flow rate, of the first ultrasonic measuring portion and the second ultrasonic measuring portion is employed.
In such present invention, the measured value, which is suitable for the actual flow rate, out of the measured value of the first ultrasonic measuring portion and the measured value of the second ultrasonic measuring portion can be employed. Therefore, a flow speed of the fluid can be measured with high accuracy.

Also, in the present invention, a plurality of flat passes are formed by stacking in the measuring pass by a plurality of partition plates that are contained in the measuring pass in substantially parallel with respective ultrasonic propagation paths, and the first ultrasonic measuring portion and the second ultrasonic measuring portion are separated by the partition plates.

The first ultrasonic measuring portion and the second ultrasonic measuring portion are separated by the partition plates respectively. Therefore, a higher measuring accuracy can be attained.

Also, in the present invention, the first ultrasonic measuring portion and the second ultrasonic measuring portion are arranged such that a propagation path center of the first ultrasonic propagation path and a propagation path center of the second ultrasonic propagation path overlap with each other when viewed along a thickness direction of the partition plates.

The propagation path center of the first ultrasonic propagation path and the propagation path center of the second ultrasonic propagation path are overlapped with each other when viewed along the thickness direction of the partition plates. Therefore, the first ultrasonic measuring portion and the second ultrasonic measuring portion can be arranged in close vicinity to each other.
As a result, the first ultrasonic measuring portion and the second ultrasonic measuring portion can be arranged in a relatively small space, and thus a space saving can be achieved.

### Advantages of the Invention

According to the ultrasonic fluid measuring device of the present invention, the ultrasonic propagation path suitable for a flow rate of the fluid can be chosen.
Therefore, such advantages are obtained that an optimum measured value can be obtained in response to a flow rate of the fluid and thus a measuring accuracy can be improved.

### Brief Description of the Drawings

FIG.1 is a sectional view showing an ultrasonic fluid measuring device (first embodiment) according to the present invention.
FIG.2 is a perspective view showing the ultrasonic fluid measuring device according to the first embodiment.
FIG.3A is a sectional view taken along an A-A line in FIG. 1, FIG. 3B is a sectional view taken along a B-B line in FIG. 1, and FIG. 3C is a sectional view taken along a C-C line in FIG.1.
FIG. 4 is a view explaining the characteristic of first to third ultrasonic measuring portions according to the first embodiment.
FIG.5 is a sectional view showing an ultrasonic fluid measuring device (second embodiment) according to the present invention.
FIG.6 is a sectional view showing an ultrasonic fluid measuring device (third embodiment) according to the present invention.
FTGS.7A and 7B are an enlarged view and a major schematic perspective view showing an ultrasonic measuring portion of an ultrasonic fluid measuring device according to a fourth embodiment.
FIGS.8A, 8B and 8C are an enlarged view, a major schematic perspective view, and a major schematic plan view showing an ultrasonic measuring portion of an ultrasonic fluid measuring device according to a fifth embodiment.

### Description of Reference Numerals and Signs

- 10, 50, 60: ultrasonic fluid measuring device
- 14: measuring pass
- 16: first ultrasonic measuring portion
- 16A, 17A, 18A: first ultrasonic transmitter-receiver
- 16B, 17B, 18B: second ultrasonic transmitter-receiver
- 17: second ultrasonic measuring portion
- 18: third ultrasonic measuring portion
- 36: first ultrasonic propagation path
- 36A: propagation path center of the first ultrasonic propagation path
- 37: second ultrasonic propagation path
- 37A: propagation path center of the second ultrasonic propagation path
- 38: third ultrasonic propagation path
- 38A: propagation path center of the third ultrasonic propagation path
- 21: first partition plate (partition plate)
- 22: second partition plate (partition plate)
- 31: first flat pass (flat pass)
- 32: second flat pass (flat pass)
- 33: third flat pass (flat pass)
- Q: flow rate

### Best Mode for Carrying Out the Invention

Respective ultrasonic fluid measuring devices according to embodiments of the present invention will be explained with reference to the drawings hereinafter.

### (First Embodiment)

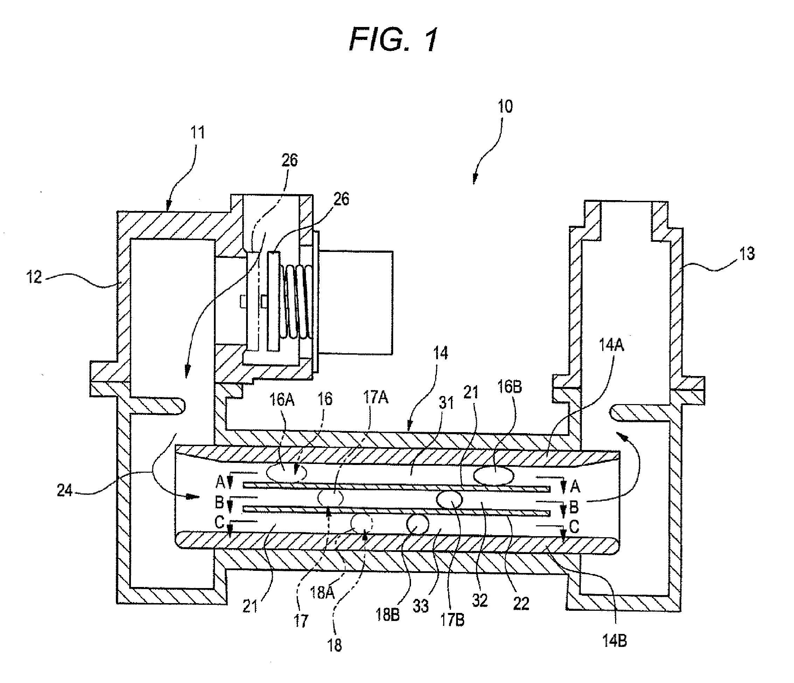

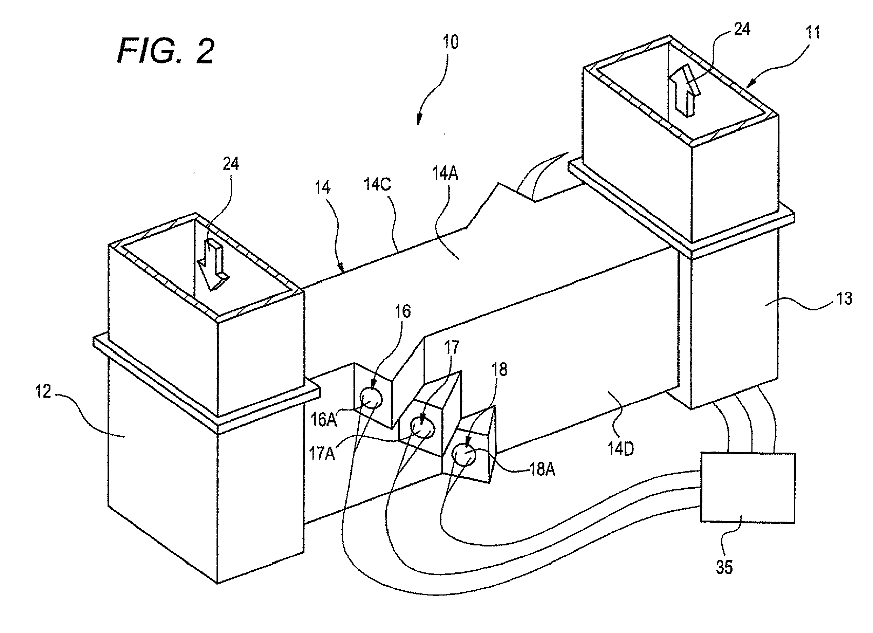

As shown in FIG.1, FIG.2, and FIG.3, an ultrasonic fluid measuring device 10 according to a first embodiment of the present invention includes a fluid pass 11 formed in an almost U-shape by left and right vertical passes 12, 13 and a measuring pass 14, a first ultrasonic measuring portion 16, a second ultrasonic measuring portion 17, and a third ultrasonic measuring portion 18 provided to the measuring pass 14, and a first partition plate 21 and a second partition plate 22 contained in the measuring pass 14 as a plurality of partition plates, and then either of measured values of the first ultrasonic measuring portion 16, the second ultrasonic measuring portion 17, and the third ultrasonic measuring portion 18 is employed in response to a flow rate Q of a fluid 24.

The fluid pass 11 has a cutoff valve 26 on the left vertical pass 12. The first partition plate 21 and the second partition plate 22 are provided at a constant interval in the measuring pass 14 along upper and lower wall portions 14A, 14B.
The measuring pass 14 is shaped into a square cylinder a cross section of which is a rectangle, by the upper and lower wall portions 14A, 14B and left and right side walls 14C, 14D. Also, since the first partition plate 21 and the second partition plate 22 are provided in parallel with the upper and lower wall portions 14A, 14B at a constant interval in the measuring pass 14, a first flat pass 31, a second flat pass 32, and a third flat pass 33 are formed by stacking as a plurality of flat passes in the measuring pass 14.
The first flat pass 31, the second flat pass 32, and the third flat pass 33 are formed to have a cross section of an almost rectangular shape respectively.

In the fluid pass 11, when the cutoff valve 26 is opened from a close position indicated by a chain double-dashed line to an open position indicated by a solid line, the fluid (for example, a natural gas or a liquefied petroleum gas) 24 flows from the left vertical pass 12 to the right vertical pass 13 through the measuring pass 14.

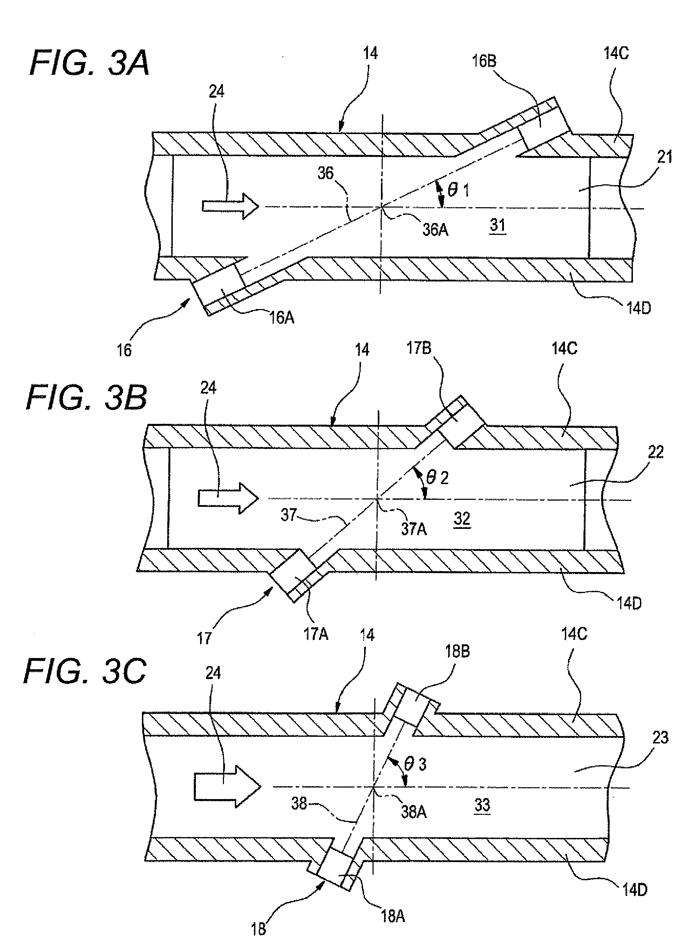

As shown in FIG.3A, the first ultrasonic measuring portion 16 is provided to the first flat pass 31. Concretely, the first ultrasonic measuring portion 16 has a first ultrasonic transmitter-receiver 16A provided to the right side wall 14D, and a second ultrasonic transmitter-receiver 16B provided to the left side wall 14C. The first ultrasonic transmitter-receiver 16A is arranged on the upstream side of the second ultrasonic transmitter-receiver 16B.

The first ultrasonic measuring portion 16, i.e., the first ultrasonic transmitter-receiver 16A and the second ultrasonic transmitter-receiver 16B, is connected to a calculating portion 35.
A first ultrasonic propagation path 36 connecting the first ultrasonic transmitter-receiver 16A and the second ultrasonic transmitter-receiver 16B constitutes the Z-path that is provided in parallel with the first partition plate 21 to intersect with the passing direction (indicated by an arrow) of the fluid 24 flowing through the measuring pass 14 at an inclination angle θ1.

In a state that the fluid 24 is flowing through the measuring pass 14, the ultrasonic wave is propagated from the first ultrasonic transmitter-receiver 16A to the second ultrasonic transmitter-receiver 16B and also the ultrasonic wave is propagated from the second ultrasonic transmitter-receiver 16B to the first ultrasonic transmitter-receiver 16A. Then, propagation times of the ultrasonic waves are measured by the calculating portion 35, and a flow speed of the fluid is derived based on measured information.

As shown in FIG.3B, the second ultrasonic measuring portion 17 is provided to the second flat pass 32. Concretely, the second ultrasonic measuring portion 17 has a first ultrasonic transmitter-receiver 17A provided to the right side wall 14D, and a second ultrasonic transmitter-receiver 17B provided to the left side wall 14C. The first ultrasonic transmitter-receiver 17A is arranged on the upstream side of the second ultrasonic transmitter-receiver 17B.

The second ultrasonic measuring portion 17, i.e., the first ultrasonic transmitter-receiver 17A and the second ultrasonic transmitter-receiver 17B, is connected to the calculating portion 35.
A second ultrasonic propagation path 37 connecting the first ultrasonic transmitter-receiver 17A and the second ultrasonic transmitter-receiver 17B constitutes the Z-path that is provided in parallel with the first and second partition plates 21, 22 to intersect with the passing direction (indicated by an arrow) of the fluid 24 flowing through the measuring pass 14 at an inclination angle θ2.

In a state that the fluid 24 is flowing through the measuring pass 14, the ultrasonic wave is propagated from the first ultrasonic transmitter-receiver 17A to the second ultrasonic transmitter-receiver 17B and also the ultrasonic wave is propagated from the second ultrasonic transmitter-receiver 17B to the first ultrasonic transmitter-receiver 17A. Then, propagation times of the ultrasonic waves are measured by the calculating portion 35, and a flow speed of the fluid is derived based on measured information.

As shown in FIG.3C, the third ultrasonic measuring portion 18 is provided to the third flat pass 33. Concretely, the third ultrasonic measuring portion 18 has a first ultrasonic transmitter-receiver 18A provided to the right side wall 14D, and a second ultrasonic transmitter-receiver 18B provided to the left side wall 14C. The first ultrasonic transmitter-receiver 18A is arranged on the upstream side of the second ultrasonic transmitter-receiver 18B.

The third ultrasonic measuring portion 18, i.e., the first ultrasonic transmitter-receiver 18A and the second ultrasonic transmitter-receiver 18B, is connected to the calculating portion 35.
A third ultrasonic propagation path 38 connecting the first ultrasonic transmitter-receiver 18A and the second ultrasonic transmitter-receiver 18B constitutes the Z-path that is provided in parallel with the second partition plate 22 to intersect with the passing direction (indicated by an arrow) of the fluid 24 flowing through the measuring pass 14 at an inclination angle θ3.

In a state that the fluid 24 is flowing through the measuring pass 14, the ultrasonic wave is propagated from the first ultrasonic transmitter-receiver 18A to the second ultrasonic transmitter-receiver 18B and also the ultrasonic wave is propagated from the second ultrasonic transmitter-receiver 18B to the first ultrasonic transmitter-receiver 18A. Then, propagation times of the ultrasonic waves are measured by the calculating portion 35, and a flow speed of the fluid is derived based on measured information.

Here, the first ultrasonic measuring portion 16 and the second ultrasonic measuring portion 17 are separated by the first partition plate 21. Also, the second ultrasonic measuring portion 17 and the third ultrasonic measuring portion 18 are separated by the second partition plate 22.
In this manner, because the first ultrasonic measuring portion 16, the second ultrasonic measuring portion 17, and the third ultrasonic measuring portion 18 are separated by the first partition plate 21 and the second partition plate 22 respectively, a higher measuring accuracy can be attained.

A relationship of θ1<θ2<θ3 is satisfied between the inclination angle θ1 of the first ultrasonic propagation path 36, the inclination angle θ2 of the second ultrasonic propagation path 37, and the inclination angle θ3 of the third ultrasonic propagation path 38.
The angles of inclination θ1, θ2, θ3 are set to an inclination angle of 0 to 90 ° respectively. The inclination angle θ1 is set to a small inclination angle close to the 0 ° side, the inclination angle θ2 is set to an intermediate inclination angle, and the inclination angle θ3 is set to a large inclination angle close to the 90 ° side.
That is, the first ultrasonic propagation path 36, the second ultrasonic propagation path 37, and the third ultrasonic propagation path 38 are set to intersect with the passing direction of the fluid 24 flowing through the measuring pass 14 at different angles of inclination θ1, θ2, θ3 respectively.

Also, the first ultrasonic propagation path 36, the second ultrasonic propagation path 37, and the third ultrasonic propagation path 38 are arranged such that a propagation path center 36A of the first ultrasonic propagation path 36, a propagation path center 17A of the second ultrasonic propagation path 37, and a propagation path center 38A of the third ultrasonic propagation path 38 overlap with each other when viewed along the thickness direction of the first partition plate 21 and the second partition plate 22.
Therefore, the first ultrasonic measuring portion 16, the second ultrasonic measuring portion 17, and the third ultrasonic measuring portion 18 can be arranged in close vicinity to each other.
As a result, the first ultrasonic measuring portion 16, the second ultrasonic measuring portion 17, and the third ultrasonic measuring portion 18 can be arranged in a relatively small space, and thus a space saving can be achieved.

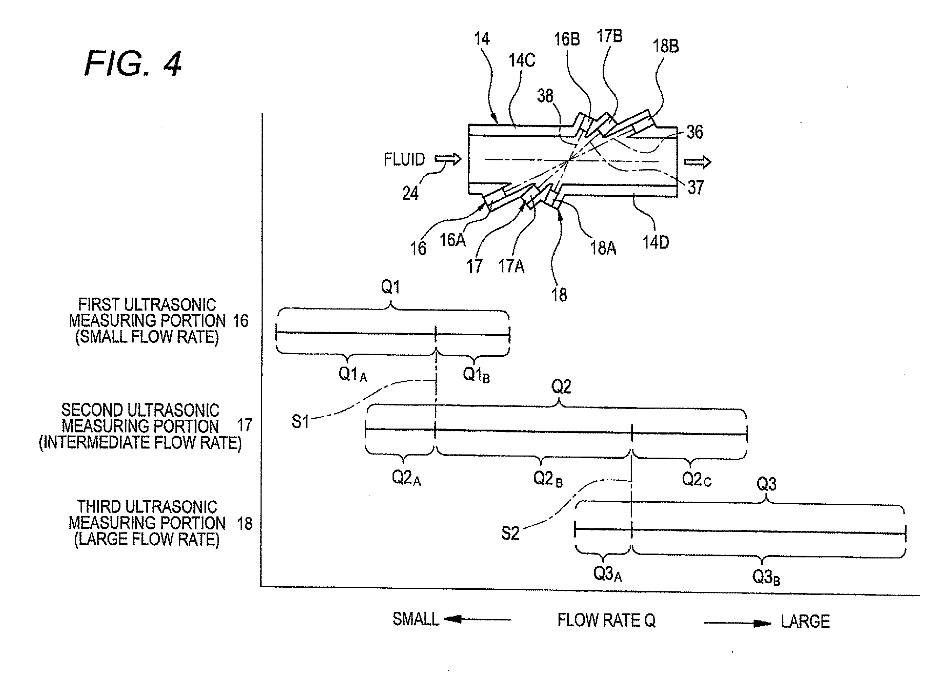

Next, the reason why the first ultrasonic measuring portion 16, the second ultrasonic measuring portion 17, and the third ultrasonic measuring portion 18 should be provided to the ultrasonic fluid measuring device 10 will be explained with reference to FIG.4 hereunder.
In the first ultrasonic measuring portion 16, the first ultrasonic propagation path 36 is set at a small inclination angle θ1 close to the 0 ° side.
When the fluid 24 flows through the measuring pass 14 in small flow rate Q1, the first ultrasonic measuring portion 16 can measure suitably a flow speed of the fluid 24.

Concretely, the first ultrasonic measuring portion 16 can measure a flow speed of the fluid 24 in small flow rate Q1_{A} out of the flow rate Q1 with high accuracy, and can measure a flow speed of the fluid 24 in flow rate Q1_{B} with somewhat good accuracy.
The flow rate Q1_{A} and the flow rate Q1_{B} are discriminated by using a threshold value S1.

In the second ultrasonic measuring portion 17, the second ultrasonic propagation path 37 is set at an intermediate inclination angle θ2.
When the fluid 24 flows through the measuring pass 14 in intermediate flow rate Q2, the second ultrasonic measuring portion 17 can measure suitably a flow speed of the fluid 24.

Concretely, the second ultrasonic measuring portion 17 can measure a flow speed of the fluid 24 in flow rate Q2_{A} out of the intermediate flow rate Q2 with somewhat good accuracy, measure a flow speed of the fluid 24 in flow rate Q2_{B} with high accuracy, and measure a flow speed of the fluid 24 in flow rate Q2_{C} with somewhat good accuracy.
The flow rate Q2_{A} and the flow rate Q2_{B} are discriminated by using the threshold value S1, and the flow rate Q2_{B} and the flow rate Q2_{C} are discriminated by using a threshold value S2.

In the third ultrasonic measuring portion 18, the third ultrasonic propagation path 38 is set at a large inclination angle θ3 close to the 90 ° side.
When the fluid 24 flows through the measuring pass 14 in large flow rate Q3, the third ultrasonic measuring portion 18 can measure suitably a flow speed of the fluid 24.

Concretely, the third ultrasonic measuring portion 18 can measure a flow speed of the fluid 24 in flow rate Q3_{A} out of the large flow rate Q3 with somewhat good accuracy, and can measure a flow speed of the fluid 24 in flow rate Q3_{B} with high accuracy.
The flow rate Q3_{A} and the flow rate Q3_{B} are discriminated by using the threshold value S2.

The ultrasonic fluid measuring device 10 is constructed such that, when the flow rate of the fluid 24 flowing through the measuring pass 14 is below the threshold value S1, this instrument can be switched to measure a flow speed of the fluid 24 by the first ultrasonic measuring portion.
Also, the ultrasonic fluid measuring device 10 is constructed such that, when the flow rate of the fluid 24 flowing through the measuring pass 14 is more than the threshold value S 1 but below the threshold value S2, this instrument can be switched to measure a flow speed of the fluid 24 by the second ultrasonic measuring portion.
Also, the ultrasonic fluid measuring device 10 is constructed such that, when the flow rate of the fluid 24 flowing through the measuring pass 14 is more than the threshold value S2, this instrument can be switched to measure a flow speed of the fluid 24 by the third ultrasonic measuring portion.

Therefore, the ultrasonic fluid measuring device 10 can select (switch) the ultrasonic measuring portion, which is suitable for the flow rate Q of the fluid 24, out of the first ultrasonic measuring portion 16, the second ultrasonic measuring portion 17, and the third ultrasonic measuring portion 18, and can measure a flow speed of the fluid 24 by the selected ultrasonic measuring portion.
As a result, the ultrasonic fluid measuring device 10 can measure the flow rate Q in the measuring pass 14 in a full range of flow over the small flow rate Q1, the intermediate flow rate Q2 and the large flow rate Q3 with high accuracy.

When the first ultrasonic measuring portion 16 and the second ultrasonic measuring portion 17 are switched simply at the threshold value S1 and the second ultrasonic measuring portion 17 and the third ultrasonic measuring portion 18 are switched simply at the threshold value S2, respective ultrasonic measuring portions 16 to 18 are switched frequently (a chattering is produced) in a situation that the flow rate Q come close to the threshold values S1, S2 respectively.
Therefore, such an event can be prevented by providing a hysteresis to the threshold values S1, S2 respectively that the first ultrasonic measuring portion 16, the second ultrasonic measuring portion 17, and the third ultrasonic measuring portion 18 are switched frequently around the threshold values S1, S2.

Next, an operation of the ultrasonic fluid measuring device 10 of the first embodiment will be explained with reference to FIG.4 hereunder.
The flow rate Q of the fluid 24 flowing through the measuring pass 14 is detected by a flow rate detecting portion (not shown), and detected information is transmitted to the calculating portion 35.
The calculating portion 35 decided to which one of the threshold values S1 or below (i.e., Q<S1), the threshold values S1 or more but the threshold values S2 or below (S1≤Q<S2), or the threshold values S2 or more (S2≤Q) the transmitted information corresponds.

When the detected flow rate Q is Q<S1, the circuit is switched to measure a flow speed by the first ultrasonic measuring portion 16. The first ultrasonic measuring portion 16 can measure a flow speed in small flow rate Q1_{A} in Q<S1 with high accuracy.
Therefore, the flow rate Q can be measured by the first ultrasonic measuring portion 16 with good accuracy, and the measure value of high accuracy can be obtained.

When the flow rate Q is increased up to S1≤Q<S2, the circuit is switched to measure a flow speed by the second ultrasonic measuring portion 17. The second ultrasonic measuring portion 17 can measure a flow speed in intermediate flow rate Q2_{B} in S1≤Q<S2 with high accuracy.
Therefore, the flow rate Q can be measured by the second ultrasonic measuring portion 17 with good accuracy, and the measure value of high accuracy can be obtained.

When the flow rate Q is further increased up to S2≤Q, the circuit is switched to measure a flow speed by the third ultrasonic measuring portion 18. The third ultrasonic measuring portion 18 can measure a flow speed in large flow rate Q3_{B} in S2≤Q with high accuracy.
Therefore, the flow rate Q can be measured by the third ultrasonic measuring portion 18 with good accuracy, and the measure value of high accuracy can be obtained.
In the present embodiment, the first ultrasonic measuring portion 16, the second ultrasonic measuring portion 17, and the third ultrasonic measuring portion 18 are set in parallel with the first partition plate 21 and the second partition plate 22 respectively. But the arrangement of these ultrasonic measuring portions is not limited to this configuration. The first ultrasonic propagation path 36, the second ultrasonic propagation path 37, and the third ultrasonic propagation path 38 may be set along the first partition plate 21 and the second partition plate 22.

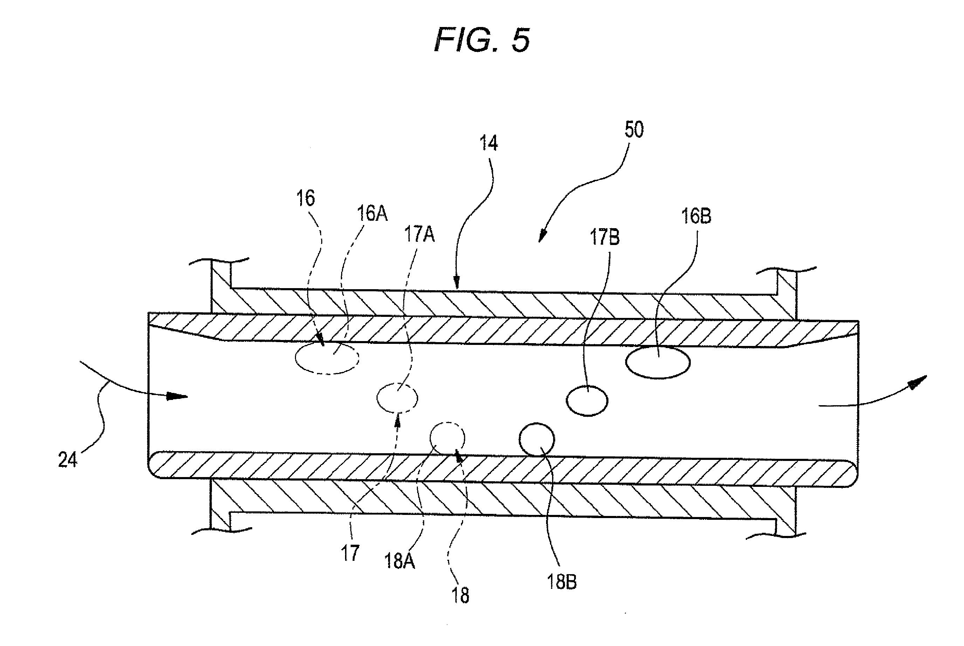

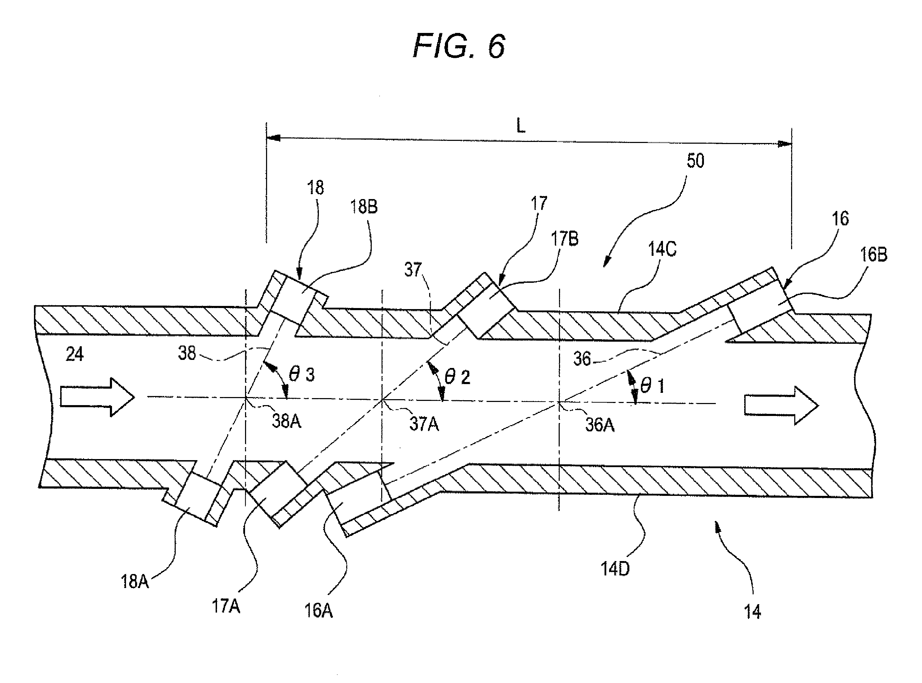

Next, ultrasonic fluid measuring devices according to a second embodiment and a third embodiment will be explained with reference to FIG.5 and FIG.6 hereunder. Here, in the second embodiment and the third embodiment, the same reference symbols are affixed to the same constituent members of the ultrasonic fluid measuring device 10 of the first embodiment, and their explanation will be omitted herein.

### (Second Embodiment)

In an ultrasonic fluid measuring device 50 shown in FIG.5 according to a second embodiment, the measuring pass 14 is constructed as a single layer by removing the first partition plate 21 and the second partition plate 22 from the measuring pass 14 of the first embodiment. Remaining configurations are similar to the first embodiment.

According to the ultrasonic fluid measuring device 50 of the second embodiment, simplification of the configuration can be achieved by removing the first partition plate 21 and the second partition plate 22 from the measuring pass 14.
In addition, according to the ultrasonic fluid measuring device 50 of the second embodiment, the similar advantages to those of the ultrasonic fluid measuring device 10 in the first embodiment can be achieved.

### (Third Embodiment)

In an ultrasonic fluid measuring device 60 shown in FIG.6 according to a second embodiment, the first ultrasonic measuring portion 16, the second ultrasonic measuring portion 17, and the third ultrasonic measuring portion 18 are arranged such that respective propagation path centers 36A to 38A of the first ultrasonic propagation path 36, the second ultrasonic propagation path 37, and the third ultrasonic propagation path 38 do not overlap with each other when viewed along the thickness direction of the first partition plate 21 and the second partition plate 22. Remaining configurations are similar to the first embodiment.

According to the ultrasonic fluid measuring device 60 of the third embodiment, there is no necessity that the first ultrasonic propagation path 36 of the first ultrasonic measuring portion 16, the second ultrasonic propagation path 37 of the second ultrasonic measuring portion 17, and the third ultrasonic propagation path 38 of the third ultrasonic measuring portion 18 should be set to overlap with each other. Therefore, when a space in which the first ultrasonic measuring portion 16, the second ultrasonic measuring portion 17, and the third ultrasonic measuring portion 18 are arranged is ensured largely, a margin in deciding a layout of the first ultrasonic measuring portion 16, the second ultrasonic measuring portion 17, and the third ultrasonic measuring portion 18 can be enhanced.
In addition, according to the ultrasonic fluid measuring device 50 of the second embodiment, the similar advantages to those of the ultrasonic fluid measuring device 10 in the first embodiment can be achieved.

In the above embodiment, an example in which the ultrasonic propagation path 19 between the first ultrasonic transmitter-receiver 17 and the second ultrasonic transmitter-receiver 18 is set to correspond to the Z-path is explained. The present invention is not restricted to this embodiment. The ultrasonic propagation path 19 can be set to correspond to the V-path or the W-path.

Also, the shapes and the configurations of the measuring pass 14, and the like illustrated in the above embodiment are not restricted to them, and may be changed appropriately.

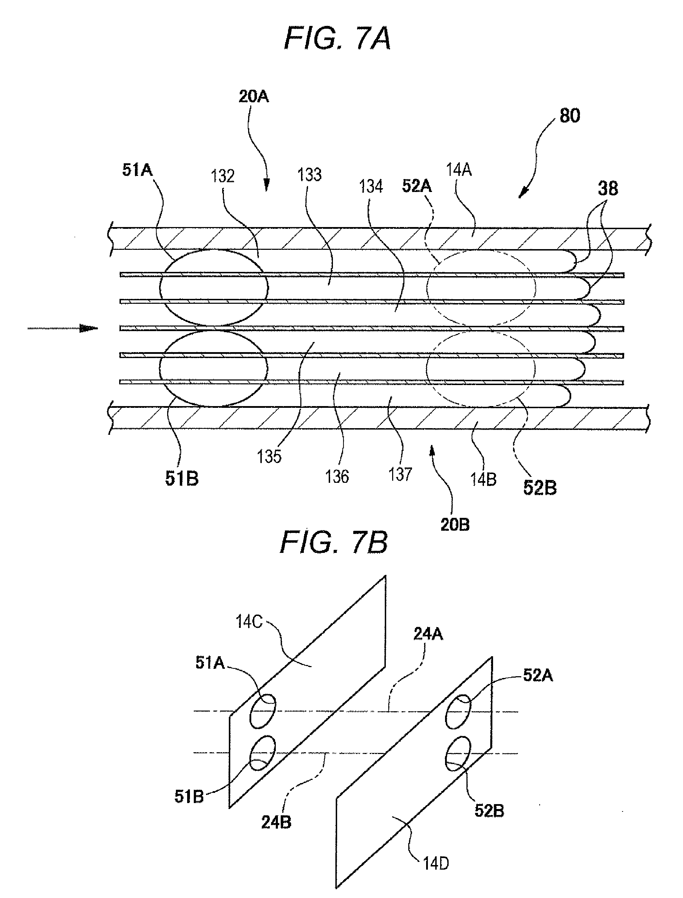

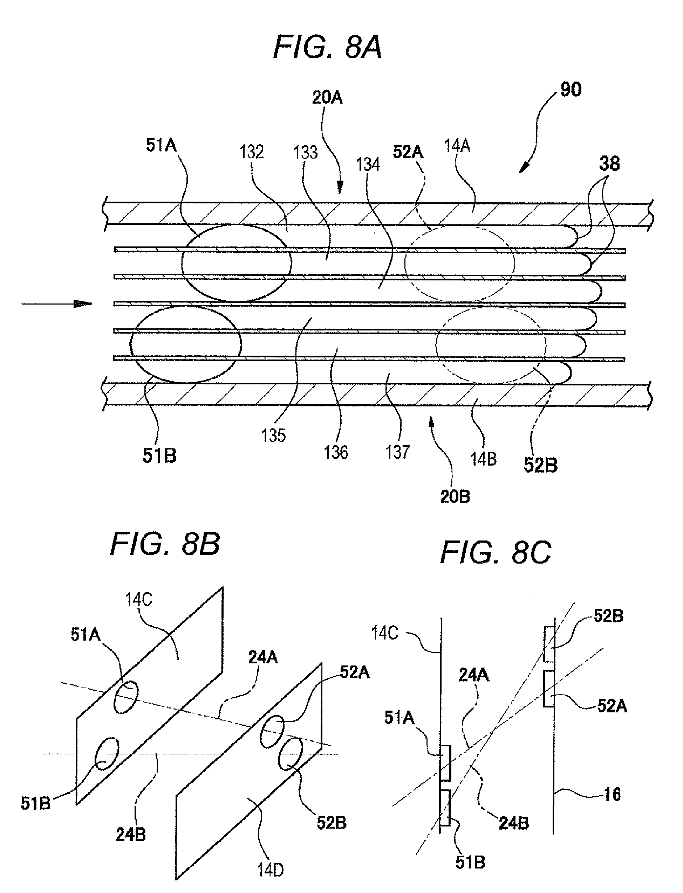

For example, a fourth embodiment shown in FIGS.7A and 7B and a fifth embodiment shown in FIGS.8A to 8C are also contained in the present invention.
An ultrasonic fluid measuring device 80 shown in FIGS.7A and 7B according to the fourth embodiment has a first ultrasonic measuring portion 20A and a second ultrasonic measuring portion 20B. The first ultrasonic measuring portion 20A and the second ultrasonic measuring portion 20B are provided in positions that are deviated vertically from a center 39 along the lamination direction (i.e., the vertical direction) with respect to first to sixth flat passes 32 to 37 formed by stacking as a plurality of flat passes in the measuring pass 14.

Concretely, in the first ultrasonic measuring portion 20A, a first ultrasonic transmitter-receiver 51 A and a second ultrasonic transmitter-receiver 52A are arranged to extend over the first to third flat passes 32 to 34 that are adjacent mutually.
In contrast, in the second ultrasonic measuring portion 20B, a first ultrasonic transmitter-receiver 51 B and a second ultrasonic transmitter-receiver 52B are arranged to extend over the fourth to sixth flat passes 35 to 37 that are adjacent mutually.

Therefore, as shown in FIG.7B, in the ultrasonic fluid measuring device 80, when viewed along the lamination direction of the first to sixth flat passes 32 to 37, an ultrasonic propagation path 24A between the first ultrasonic transmitter-receiver 51 A and the second ultrasonic transmitter-receiver 52A is set in parallel with an ultrasonic propagation path 24B between the first ultrasonic transmitter-receiver 51B and the second ultrasonic transmitter-receiver 52B.

According to such ultrasonic fluid measuring device 80, when the whole fluid in the first to sixth flat passes 32 to 37 is measured by the first ultrasonic measuring portion 20A and the second ultrasonic measuring portion 20B, a flow speed of the fluid 38 can be measured with further good accuracy.
Also, normally a flow speed of the fluid 38 is measured by using only either of the first ultrasonic measuring portion 20A and the second ultrasonic measuring portion 20B. When the high-accuracy measurement is needed, a flow speed of the fluid 38 can be measured by using both the first ultrasonic measuring portion 20A and the second ultrasonic measuring portion 20B with further good accuracy.

An ultrasonic fluid measuring device 90 shown in FIGS.8A to 8C according to a fifth embodiment is a variation of the fourth embodiment. The first ultrasonic transmitter-receiver 51A, the second ultrasonic transmitter-receiver 52A, the first ultrasonic transmitter-receiver 51B, and the second ultrasonic transmitter-receiver 52B are arranged (see FIGS.8B,8C) such that, when viewed along the lamination direction of the first to sixth flat passes 32 to 37, the ultrasonic propagation path 24A intersects with the ultrasonic propagation path 24B.

According to such ultrasonic fluid measuring device 90, like the fourth embodiment, when the whole fluid in the first to sixth flat passes 32 to 37 is measured by the first ultrasonic measuring portion 20A and the second ultrasonic measuring portion 20B, a flow speed of the fluid 38 can be measured with further good accuracy.
Also, normally a flow speed of the fluid 38 is measured by using only either of the first ultrasonic measuring portion 20A and the second ultrasonic measuring portion 20B. When the high-accuracy measurement is needed, a flow speed of the fluid 38 can be measured by using both the first ultrasonic measuring portion 20A and the second ultrasonic measuring portion 20B with further good accuracy.
Also, when any one of the first ultrasonic measuring portion 20A and the second ultrasonic measuring portion 20B, which is suitable for the flow rate of the fluid 38, is used selectively, an optimum measured value can be obtained in response to the flow rate of the fluid and thus a measuring accuracy can be improved.

This application is based upon Japanese Patent Application (Patent Application No.2006-303201) filed on November 8, 2006; the contents of which are incorporated herein by reference.

### Industrial Applicability

The present invention is suitable for the ultrasonic fluid measuring device that measures a flow speed of the fluid such as natural gas, liquefied petroleum gas, air, water, and the like flowing through the measuring pass.

## Claims

1. An ultrasonic fluid measuring device comprising:
a measuring pass formed in a square cylinder a cross section of which is a rectangle; and
a first ultrasonic measuring portion and a second ultrasonic measuring portion provided to the measuring pass;
whereby the first ultrasonic measuring portion and the second ultrasonic measuring portion have a first ultrasonic transmitter-receiver and a second ultrasonic transmitter-receiver provided to the measuring pass respectively, and
- a first ultrasonic propagation path and a second ultrasonic propagation path, which connect the first ultrasonic transmitter-receiver and the second ultrasonic transmitter-receiver respectively, intersect with each other a passing direction of the fluid flowing through the measuring pass at different angles,
wherein either of measured values of the first ultrasonic measuring portion and the second ultrasonic measuring portion is employed corresponding to the flow rate of the fluid.

2. An ultrasonic fluid measuring device according to claim 1, wherein any one measured value, which is suitable for the flow rate, of the first ultrasonic measuring portion and the second ultrasonic measuring portion is employed.

3. An ultrasonic fluid measuring device according to claim 1 or claim 2, wherein a plurality of flat passes are formed by stacking in the measuring pass by a plurality of partition plates that are contained in the measuring pass in substantially parallel with respective ultrasonic propagation paths, and
the first ultrasonic measuring portion and the second ultrasonic measuring portion are separated by the partition plates.

4. An ultrasonic fluid measuring device according to any one of claim 1 to claim 3, wherein the first ultrasonic measuring portion and the second ultrasonic measuring portion are arranged such that a propagation path center of the first ultrasonic propagation path and a propagation path center of the second ultrasonic propagation path overlap with each other when viewed along a thickness direction of the partition plates.
